(19) Europäisches Patentamt

European Patent Office

Office européen des brevets

(11) EP 0 574 870 B1

(12) **EUROPÄISCHE PATENTSCHRIFT**

(45) Veröffentlichungstag und Bekanntmachung des Hinweises auf die Patenterteilung:
**25.11.1998 Patentblatt 1998/48**

(51) Int Cl.⁶: **D01F 2/02**, C08J 5/18

(21) Anmeldenummer: **93109513.7**

(22) Anmeldetag: **15.06.1993**

(54) **Verfahren zur Herstellung von Cellulose-Formkörpern**

Process for producing cellulose moulded articles

Procédé de fabrication d'articles moulés en cellulose

(84) Benannte Vertragsstaaten:
**AT BE CH FR GB LI**

(30) Priorität: **16.06.1992 DE 4219658**
**17.03.1993 DE 4308524**

(43) Veröffentlichungstag der Anmeldung:
**22.12.1993 Patentblatt 1993/51**

(73) Patentinhaber: **Ostthüringische Materialprüfgesellschaft für Textil und Kunststoffe mbH Rudolfstadt 07407 Rudolstadt (DE)**

(72) Erfinder:
• **Michels, Christoph, Dr.**
  **O-6820 Rudolstadt (DE)**
• **Maron, Reinhard, Dr.**
  **O-6822 Rudolstadt (DE)**
• **Berghof, Klaus**
  **O-6820 Rudolstadt (DE)**

(74) Vertreter: **Fechner, Joachim, Dr.-Ing. Im Broeltal 118 53773 Hennef (DE)**

(56) Entgegenhaltungen:
**EP-A- 0 494 851        DE-A- 2 913 589**

## Beschreibung

Die Erfindung betrifft ein Verfahren zur Herstellung von Cellulosefasern, -filamenten und -folien nach dem Trocken-Naßextrusionsverfahren aus einer Lösung von Cellulose in einem Wasser enthaltenden N-Oxid eines tertiären Amins, insbesondere N-Methylmorpholin-N-oxid, durch Extrudieren der Lösung durch ein Formwerkzeug in ein die Cellulose nicht ausfällendes Medium, Orientieren der Cellulosemoleküle durch Verzug des extrudierten Lösungsstrahls in diesem Medium und Ausfällen der Cellulose aus dem Lösungsstrahl durch Berührung mit einem Fällmedium ohne Verstreckung.

Aus der DE-C-29 13 589 ist die Trocken-Naßverspinnung von Celluloselösungen in N-Methylmorpholin-N-oxid/Wasser-Gemischen bekannt. Dabei soll das Verstreckungsverhältnis in dem zwischen der Düse und dem Koagulationsbad befindlichen nicht-ausfällenden Medium wenigstens 3 betragen. Die in den Beispielen angegebenen Werte für das Verstreckungsverhältnis reichen von 3,6 bis 798. Die Verstreckungsstrecken zwischen Düse und Koagulationsbad sind mit 50 bzw. 305 mm angegeben. Das Spinn-Verstreckungsverhältnis wird dabei ausschließlich über die Abzugsgeschwindigkeit variiert, was zu Fasern mit unterschiedlichen Feinheiten führt. Es hat sich aber gezeigt, daß die Festigkeit und andere durch den Zugversuch feststellbare Fasereigenschaften von der Feinheit nicht unabhängig sind, sondern daß Fasern mit grober Feinheit, auch wenn sie nach dem gleichen Verfahren hergestellt werden, eine niedrigere spezifische Festigkeit aufweisen als feinere Fasern. Es wäre daher von Vorteil, neben dem Spinnverzug eine zweite Einflußgröße zur Verfügung zu haben, durch welche die Festigkeits- und Dehnungseigenschaften der Faser bzw. Folie beeinflußt werden können. Dies wäre auch deshalb vorteilhaft, weil dann der praktische Spinnverzug auf Werte unter 3 verringert werden könnte, ohne daß dies eine Verschlechterung der Faser- und Folieneigenschaften zur Folge hätte. Außerdem könnte durch eine Herabsetzung des Spinnverzugs die Störanfälligkeit des Spinnbetriebs verringert werden.

Bekanntlich trägt die Oberflächenstruktur einer Faser zum textilen Verhalten des aus der Faser gefertigten Produkts in hohem Maße bei. So werden z.B. Glanz und Griff eines Textilartikels stark von der morphologischen Struktur der Faseroberfläche mitbestimmt. Die Viskosefaser hat eine mehrfach gelappte Oberflächenstruktur, wobei die Einschnürungen an der Oberfläche in der Faserlängsrichtung verlaufen. Diese Oberflächenstruktur der Viskosefaser führt zu befriedigenden textilen Eigenschaften, wie z.B. genügender Faserhaftung bei der Verspinnung zu Fasergarnen, hinreichendem Fadenschluß bei Filamentgarnen und ausreichender Schiebefestigkeit der Flächengebilde aus diesen Garnen.

Es wurde festgestellt, daß die aus Aminoxidlösungen nach dem Trocken-Naßextrusionsverfahren ersponnenen Einzelfaden einen ungelappten, runden Querschnitt aufweisen. Die unterschiedliche Oberflächenstruktur im Vergleich zur Viskosefaser kann auf die unterschiedlichen Vorgänge bei der Faserbildung zurückgeführt werden, die bei der Viskosefaser Koagulation und Zersetzung des Cellulosexanthogenats umfassen, während bei der Cellulosefaserbildung aus der Aminoxidlösung eine Fällung ohne chemische Reaktion erfolgt. Der runde Querschnitt und die relativ glatte Oberfläche der aus Aminoxidlösung ersponnenen Cellulosefasern und -filamente können bei der Weiterverarbeitung zu Garnen und Flächengebilden zu Problemen führen. Diese Probleme können eine mangelhafte Faserhaftung bei der Verspinnung der Spinnfaser zu Garnen, ein unzureichender Fadenschluß bei den Filamentgarnen und eine zu geringe Schiebefestigkeit der Flächengebilde aus diesen Faser- und Filamentgarnen sein.

Der vorliegenden Erfindung liegt die Aufgabe zugrunde, ein Verfahren zur Herstellung von Cellulose-Formkörpern, wie insbesondere Fasern und Folien, aus einer Lösung von Cellulose in einem ein Nicht-Lösungsmittel enthaltenden N-Oxid eines tertiären Amins nach dem Trocken-Naßextrusionsverfahren zu schaffen, bei dem die gewünschten Festigkeitseigenschaften des Formkörpers nur teilweise durch den Verzug in dem nicht ausfällenden Medium zwischen Formwerkzeug und Fällmedium und darüber hinaus durch eine weitere Einflußgröße bei der Verspinnung erreicht werden können. Insbesondere soll der Spinnverzug mit dem Ziel verringert werden, die Sicherheit des Spinnbetriebs zu erhöhen. Darüber hinaus soll auch die Verzugsstrecke zwischen dem Formwerkzeug und dem Fällmedium verkürzt werden. Außerdem soll die Anzahl der Düsenbohrungen pro Flächeneinheit erhöht werden. Schließlich sollen auch die Festigkeitseigenschaften der Formkörper, insbesondere die Dehnungswerte und die Schlingenfestigkeitswerte der ersponnenen Fasern verbessert werden. Weite Vorteile des erfindungsgemäßen Verfahrens ergeben sich aus der nachfolgenden Beschreibung.

Diese Aufgabe wird bei dem eingangs genannten Verfahren erfindungsgemäß dadurch gelöst, daß man die Celluloselösung durch ein Formwerkzeug extrudiert, dessen zylindrische Düsenkanäle einen Durchmesser in dem Bereich von 50 bis 120 µm oder dessen Schlitze eine Breite in dem Bereich von 50 bis 200 µm haben, durch das Schergefälle im Formwerkzeugkanal einen Lösungsstrahl mit vororientierten Cellulosemolekülen erzeugt und den Verzug dieses Lösungsstrahls in dem nicht ausfällenden Medium in einem Verhältnis in dem Bereich $1,4 < V < 3$ durchführt.

Durch das erfindungsgemäß im Formwerkzeugkanal herrschende Schergefälle wird eine Vororientierung der Cellulosemoleküle erreicht, so daß man mit einem vergleichsweise geringen Spinnverzug die Festigkeitswerte der nach dem bekannten Verfahren hergestellten Fasern erreicht und teilweise übertrifft. Es konnte festgestellt werden, daß die im Formwerkzeugkanal erzeugte Orientierung der Cellulosemoleküle in der anschließenden Aufweitungszone des Lösungsstrahls nach dem Verlassen des Kanals nicht wieder verschwindet, sondern sich wenigstens teilweise zu der durch den Verzug erzeugten Orientierung addiert. Im Ergebnis werden wenigstens teilweise verbesserte Festigkeitswerte der erzeugten Formkörper erreicht, und durch den verringerten Verzug wird die Störanfälligkeit (Fadenriß) verringert und der Spinnbetrieb erleichtert.

Vorzugsweise wird die Celluloselösung durch ein Formwerkzeug extrudiert, dessen zylindrische Düsenkanäle einen Durchmesser in dem Bereich von 50 bis 70 μm haben. Durch den im Vergleich zum Stand der Technik verringerten Düsenlochdurchmesser wird das für die Molekülorientierung im Düsenkanal erforderliche Schergefälle in besonderem Maße erreicht. Bei der Herstellung von Folien hat sich gezeigt, daß mit abnehmender Schlitzbreite die physikalischen Werte, wie Knotendehnung und Knotenfestigkeit von Folienbändchen zunehmen.

Bei der bevorzugten Ausführungsform des erfindungsgemäßen Verfahrens zur Faserherstellung erzeugt man die Vororientierung in dem aus der Düse austretenden Spinnstrahl durch ein Schergefälle in dem Düsenkanal $\dot{\gamma} > 3 \cdot 10^4 \ s^{-1}$. Dabei gilt für das Schergefälle

$$\dot{\gamma} = \frac{4 \cdot \dot{V}}{\pi \cdot R^3},$$

wobei $\dot{V}$ die Volumengeschwindigkeit durch den Düsenlochquerschnitt und R den Radius des kreisförmigen Düsenlochquerschnitts bedeuten. Der genannte Zahlenwert für das Schergefälle gilt bei einer Endabzugsgeschwindigkeit von 50 m/min. Bei geringeren Endabzugsgeschwindigkeiten kann der minimale Grenzwert für $\dot{\gamma}$ entsprechend geringer als $3 \cdot 10^4 \ s^{-1}$, aber nicht kleiner als $3 \cdot 10^3 \ s^{-1}$ sein. Der kleinere Wert gilt für die Randbedingungen: 70 μm Düsenlochdurchmesser; 8 m/min Endabzugsgeschwindigkeit; V = 3; 10,5 Gew.-% Cellulose in der Lösung.

Bei einer anderen bevorzugten Ausführungsform des erfindungsgemäßen Verfahrens zur Folienherstellung erzeugt man die Vororientierung durch ein Schergefälle im Schlitzdüsenkanal von $\dot{\gamma} > 1,3 \cdot 10^4 \ s^{-1}$. Diesem Grenzwert liegt die Beziehung

$$\dot{\gamma} = \frac{6 \cdot \dot{V}}{B \cdot H^2}$$

zugrunde, in der $\dot{V}$ die o.a. Bedeutung hat und B die Schlitzlänge und H die Schlitzbreite bedeuten. Der Grenzwert gilt ebenfalls für die Endabzugsgeschwindigkeit von 50 m/min. Bei geringeren Endabzugsgeschwindigkeiten verringert sich auch der Grenzwert für $\dot{\gamma}$, aber nicht unter $\dot{\gamma} = 1,3 \cdot 10^3 \ s^{-1}$. Der kleinere Wert gilt für die Randbedingungen: 200 um Schlitzbreite, 10 m/min Endabzugsgeschwindigkeit, V = 3, 10,5 Gew.-% Cellulose i. d. Lösung.

Nach der bevorzugten Ausführungsform des erfindungsgemäßen Verfahrens erfolgt der Verzug in dem nicht ausfällenden Medium auf einer Strecke in dem Bereich von 2 bis 48 mm, vorzugsweise von 2 bis 20 mm. Der im Vergleich zum Stand der Technik verringerte Verzug ermöglicht eine Verkürzung der Verzugsstrecke und damit eine kompaktere Spinnapparatur.

Vorzugsweise erfolgt die Berührung des Lösungsstrahls mit dem Fällmedium im Gleichstrom in einem Spinntrichter. Dabei steht die Achse des Spinntrichters im wesentlichen senkrecht und ist die Strömung des Fällmediums von oben nach unten gerichtet. Die Strömung des Fällmediums durch den Spinntrichter wird im allgemeinen durch den freien Fall erzeugt. Der Verzug wird dann so erreicht, daß die ausfallende Fadenschar von dem durch den Spinntrichter strömenden Fällmedium im wesentlichen auf ihre Abzugsgeschwindigkeit beschleunigt wird. In Abhängigkeit von Kapillaranzahl, Filamenttiter und Ausgangsquerschnitt des Spinntrichters werden weniger als 30 % der Spinnbadgeschwindigkeit auf die Fadenschar übertragen. Dabei ist die Spinntrichlerlänge x so zu dimensionieren, daß unter Berücksichtigung des Überstands Δx der Spinnbadoberfläche über der Spinntrichteroberkante gemäß der Formel v = $\sqrt{2 \ g(x + \Delta x)}$ für die Endgeschwindigkeit des Fällmediums an dem unter dem Spinntrichter befindlichen Umlenkorgan die Zugangsgeschwindigkeit der Fadenschar im wesentlichen gleich ihrer Abzugsgeschwindigkeit ist, so daß die Reibung gegen null geht und damit eine unkontrollierte Verstreckung des ausgefällten Cellulosefadens vermieden wird. Die Nachverstreckung des ausgefällten Fadens würde seine textilphysikalischen Parameter, insbesondere die Dehnung nachteilig beeinflußen. Der Spinntrichter trägt dazu bei, daß die durch das Schergefälle im Formwerkzeug und den Fadenverzug in dem nicht ausfällenden Medium erzeugte Molekülorientierung und damit die durch die Ausfällung fixierten Festigkeitseigenschaften nicht durch eine zusätzliche Verstreckung des ausgefällten Cellulosefadens beeinträchtigt werden. Die Benutzung des Spinntrichters hat ferner den Vorteil, daß die Handhabbarkeit des Verfahrens, insbesondere beim Anspinnen, wesentlich vereinfacht wird.

Zweckmäßigerweise wird die Lösung der Cellulose mit einer Temperatur in das nicht ausfällende Medium extrudiert, die in dem Bereich von 70 bis 95 °C liegt. Es hat sich gezeigt, daß durch eine Absenkung der Spinntemperatur eine Verbesserung der Faserwerte erreicht wird, und zwar sowohl eine Steigerung der Dehnungswerte als auch der Festigkeiten. Die niedrigeren Spinntemperaturen führen aufgrund der dadurch angestiegenen Viskosität der Spinnlösung zu einer höheren Vororientierung der Cellulosemoleküle in dem Düsenkanal, was zu besseren textilphysikalischen Werten der Fasern führt. Das nicht ausfällende Medium ist im allgemeinen gasförmig. Insbesondere besteht es aus Luft oder Stickstoff.

Die Temperatur des ausfällenden Mediums wird zweckmäßigerweise in dem Bereich von -2 bis +20 °C, vorzugsweise im Bereich von 5 bis 10 °C gehalten. Sie liegt damit vorzugsweise unter der in DE-C-29 13 589 angegebenen Fällbadtemperatur. Das ausfällende Medium kann aus Wasser oder verdünnten wässrigen Lösungen des zur Lösung der Cellulose eingesetzten Aminoxids bestehen.

Der Cellulosegehalt der zu extrudierenden Lösung liegt in dem Bereich von 6 bis 16 Gew.-%, vorzugsweise in dem Bereich von 7 bis 12 Gew.-%. Die Lösung enthält neben dem N-Oxid, insbesondere N-Methylmorpholin-N-oxid, etwa 10 bis 14 Gew.-%, insbesondere etwa 12 Gew.-% Wasser (Lösung in N-Methylmorpholin-N-oxid-Monohydrat).

Bei einer weiteren Ausführungsform des erfindungsgemäßen Verfahrens ist vorgesehen, daß man in dem Formwerkzeug durch Profildüsen mit nicht-kreisförmigem Querschnitt aus der Lösung Profilfasern oder -filamente erspinnt. Überraschenderweise hat sich gezeigt, daß bei dem erfindungsgemäßen Verfahren ein Verlaufen des durch die Düsen vorgegebenen Profils des Faserstrahls weitgehend vermieden wird bzw. der durch die Spinndüsenkapillare vorgegebene Faserquerschnitt weitgehend erhalten bleibt. Damit erhält die erzeugte Profilfaser günstige Weiterverarbeitungseigenschaften hinsichtlich der Faserhaftung bei der Verspinnung, des Fadenschlusses bei Filamentgarnen und der Schiebefestigkeit von flächigen Textilgebilden aus diesen Garnen.

Der Erhalt des durch die Düsenkapillare vorgegebenen Faserquerschnitts im Zuge der Erspinnung beruht auf der starken Vororientierung der Moleküle im Düsenkanal und Spinnstrahl, dem vergleichsweise geringen äußeren Verzug, dem geringen Abstand zwischen Düsenkapillaraustritt und Fällbadeintritt von vorzugsweise 0,2 bis 2,0 mm und der vergleichsweise hohen Viskosität der Spinnlösung. Die Nullscherviskosität der Spinnlösung bei 95 °C liegt im allgemeinen in dem Bereich von 600 bis 6000 Pa·s, vorzugsweise in dem Bereich von 1000 bis 1250 Pa·s. Außer den günstigen Eigenschaften der aus den erfindungsgemäß ersponnenen Filamenten erhaltenen Textilprodukte, wie Faserhaftung, Schiebefestigkeit usw. ergibt sich im Vergleich zu Garnen gleicher Feinheit aus gleichfeinen Filamenten mit kreisförmigem Querschnitt eine erhöhte Reißfestigkeit. Diese resultiert aus der in den profilierten Düsenkanälen stärkeren Scherung der Spinnlösung und der damit einhergehenden stärkeren Ausrichtung der Cellulosemoleküle im Spinnstrahl und im ersponnenen Filament.

Nach der bevorzugten Ausführungsform des erfindungsgemäßen Verfahrens erspinnt man aus der Lösung durch die Profildüsen Fasern oder Filamente mit Y-, Dreieck- oder Rechteckprofil. Bei Rechteckprofilfasern liegt das Verhältnis von Breite zu Dicke des Querschnitts im Bereich von 1:1 bis 10:1, vorzugsweise in dem Bereich von 2:1 bis 6:1. Es können jedoch auch andere, von der Kreisform abweichende Düsenquerschnitte benutzt werden, z.B. quadratische oder sternförmige Querschnitte. Bei Y-förmigen Düsenquerschnitten beträgt der Winkel zwischen den Stegen vorzugsweise je 120°. Darüber hinaus können auch Hohlprofilfasern ersponnen werden.

Nach dem erfindungsgemäßen Verfahren können nicht nur Fasern und Filamente hergestellt werden, sondern auch Folien, die vielseitig einsetzbar sind. So können Folienbändchen als Erntebindegarn verwendet werden, das verrottbar und im Rindermagen abbaubar ist. Es können auch Schlauchfolien hergestellt werden, die in der Lebensmittelindustrie einsetzbar sind.

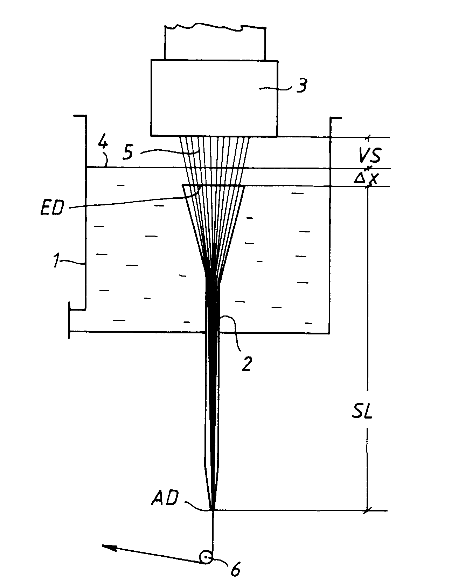

Die Figur zeigt schematisch eine zur Durchführung des erfindungsgemäßen Verfahrens benutzte Apparatur und die Dimensionierung des Spinntrichters mit Bezug auf die Tabelle IV. In dem Fällbadbehälter 1 ist ein Spinntrichter 2 derart fest installiert, daß sein Unterteil durch den Boden des Behälters 1 nach unten ragt. Der Eingangsdurchmesser des Spinntrichters 2 ist mit ED bezeichnet, der Ausgangsdurchmesser mit AD. Die Spinntrichterlänge trägt die Bezeichnung SL. Der Abstand der Unterseite der Spinndüse 3 von der Oberseite 4 des Spinnbades, d.h. die Verzugsstrecke ist mit VS bezeichnet, der Überstand des Spinnbades über der Oberkante des Spinntrichters 2 mit Δx. Die ersponnene Fadenschar 5 wird von dem in dem Trichter 2 fallenden Spinnbad soweit beschleunigt, daß die Zuliefergeschwindigkeit der zusammengeführten Fadenschar zum Umlenkorgan 6 etwa gleich der Abzugsgeschwindigkeit ist, so daß praktisch keine Nachverstreckung an dem Umlenkorgan 6 eintritt.

Das erfindungsgemäße Verfahren wird nachfolgend durch die Beispiele näher erläutert, wobei auch nicht unter die Erfindung fallende Beispiele zum Vergleich angegeben sind.

Beispiele 1 und 2

Eine in einem beheizbaren Mischer hergestellte Lösung von Holzzellstoff in N-Methylmorpholin-N-oxid/Wasser (etwa Monohydrat) mit einem Cellulosegehalt von 7,8 Gew.-% wird aus einem Vorratsbehälter über eine Zahnradpumpe Spinndüsen mit Düsenlochdurchmessern von 60 und 70 μm zugeführt. Bei einer Düsentemperatur von 95 °C durchlaufen die aus den Düsen austretenden Fäden der Spinnlösung einen 11 mm breiten Luftspalt, in dem sie einem Verzug von 2,1 bzw. 2,8 unterzogen werden, bevor sie in eine verdünnte wässrige Aminoxidlösung als Spinnbad bzw. Fällmedium eintreten, deren Temperatur bei 7,5 °C liegt. Die Fäden werden durch einen mit dem Spinnbad gespeisten Spinnt-

EP 0 574 870 B1

richter mit den Abmessungen SL = 450 mm, ED = 90 mm und AD = 6 mm (vergl. Figur), dessen Gestaltung hinsichtlich Länge, Strömungsprofil und Strömungsgeschwindigkeit Einfluß auf die Fasereigenschaften hat, mit einer Aufwickelgeschwindigkeit von 50 m/min abgezogen, gesammelt und anschließend zu einer Stapellänge von 34 bis 38 mm geschnitten.

Vergleichsbeispiel 1 und 2

Es wird wie in den Beispielen 1 bis 3 gearbeitet, wobei jedoch die Düsenlochdurchmesser 80 μm und 90 μm, die Spinnverzüge 3,7 bzw 4,7 und die Schergefälle $2,25 \cdot 10^4$ $s^{-1}$ bzw. $1,58 \cdot 10^4$ $s^{-1}$ betragen.

Die Tabelle I zeigt den Einfluß des Schergefälles und des Spinnverzugs auf die textilphysikalischen Werte der nach den Beispielen 1 bis 3 und Vergleichsbeispielen 1 und 2 erhaltenen Fasern. Es ist ersichtlich, daß die Faserwerte durch das Schergefälle in der Bohrung und den Spinnverzug bei gleichbleibender Faserfeinheit in der Weise beeinflußt werden, daß trotz geringem Spinnverzug die Werte für die Reißdehnung im trockenen und nassen Zustand sowie für die Schlingenreißkraft ansteigen. Da die Reißdehnungs- und Schlingenreißkraftwerte als Kriterium fiir die die Verarbeitbarkeit und das Gebrauchswertverhalten beeinflussende Sprödigkeit von Cellulosefasern angesehen werden, ist dies ein Weg, diese Eigenschaften günstig zu beeinflussen. Aus der Tabelle I ist auch ersichtlich, daß die Trocken- und Naßfestigkeiten trotz eines Spinnverzugs von weniger als 3 auf einem hohen Niveau liegen.

5

Tabelle I

| | Bohrungsdurchmesser μm | Bohrungsdichte cm⁻² | Schergefälle 10⁴·s⁻¹ | Verzug | Titer tex | Faserwerte | | | | |
|---|---|---|---|---|---|---|---|---|---|---|
| | | | | | | Dehnung % | | Festigkeiten mN/tex | | |
| | | | | | | trocken | naß | trocken | naß | Schlinge |
| Beisp. 1 | 60 | 160 | 5,29 | 2,1 | 0,145 | 13 | 16 | 372 | 305 | 139 |
| Beisp. 2 | 70 | 160 | 3,40 | 2,8 | 0,146 | 12 | 16 | 387 | 310 | 135 |
| Vergleichsbeispiel 1 | 80 | 95 | 2,25 | 3,7 | 0,147 | 12 | 15 | 400 | 319 | 126 |
| Vergleichsbeispiel 2 | 90 | 95 | 1,58 | 4,7 | 0,149 | 11 | 14 | 405 | 326 | 121 |

Beispiele 3 und 4

In einem heizbaren Mischer wird eine Lösung von Holzzellstoff in N-Methylmorpholin-N-oxid/Wasser mit einem Cellulosegehalt von 10,5 Gew.-% hergestellt und daraus durch Spinndüsen mit 50 µm bzw. 60 µm Düsenlochdurchmesser Fasern ersponnen.

Vergleichsbeispiele 3 und 4

Es wird wie in Beispiel 4 gearbeitet, wobei jedoch die Verspinnung durch Düsen mit Lochdurchmessern von 70 µm und 90 µm erfolgt.

Die in Tabelle II zusammengestellten ermittelten Faserwerte der Beispiele 4 und 5 und der Vergleichsbeispiele 3 und 4 zeigen, daß auch bei höherer Cellulosekonzentration trotz eines geringen Spinnverzugs bei hohem Schergefälle in der Düsenbohrung die Werte für die Reißdehnung, trocken und naß, sowie für die Schlingenreißkraft ansteigen, und daß das Niveau der textilphysikalischen Werte mit zunehmender Cellulosekonzentration ansteigt. Dies beruht darauf, daß die durch die höhere Cellulosekonzentration angestiegene Viskosität der Spinnlösung zu einer stärkeren Orientierung der Cellulosemoleküle bei vergleichbaren Lineargeschwindigkeiten der Spinnlösung im Düsenlochkanal führt. Damit lassen sich bei einem Spinnverzug von 2,8 Fasern herstellen, die bei einer Feinheit von 0,143 tex Festigkeitswerte von 440 mN/tex bzw. Naßfestigkeitswerte von 370 mN/tex aufweisen, während nach der DE-C--29 13 589 bei einem Spinnverzug von 3,6 nur Festigkeitswerte von 168 mN/tex bzw. 71 mN/ tex erreicht werden.

Tabelle II

| | Bohrungsdurchmesser μm | Schergefälle $10^4$ s$^{-1}$ | Verzug | Titer tex | Faserwerte | | | | |
|---|---|---|---|---|---|---|---|---|---|
| | | | | | Dehnung % | | Festigkeiten mN/tex | | |
| | | | | | trocken | naß | trocken | naß | Schlinge |
| Beisp. 3 | 50 | 7,02 | 1,9 | 0,141 | 15 | 18 | 434 | 360 | 175 |
| Beisp. 4 | 60 | 3,97 | 2,8 | 0,143 | 14 | 17 | 440 | 370 | 170 |
| Vergleichsbeispiel 3 | 70 | 2,50 | 3,8 | 0,148 | 14 | 16 | 443 | 376 | 160 |
| Vergleichsbeispiel 4 | 90 | 1,19 | 6,2 | 0,140 | 13 | 15 | 448 | 395 | 153 |

Beispiele 5 bis 11

In einem heizbaren Mischer wird eine Lösung von Holzzellstoff in N-Methylmorpholin-N-oxid/Wasser mit einem Cellulosegehalt von 7,8 Gew.-% hergestellt und analog Beispiel 4 Fasern daraus hergestellt. Dabei wurde die über die Düsentemperatur eingestellte Spinntemperatur zwischen 70 und 115 °C variiert, wie aus Tabelle III ersichtlich ist. Durch Zugversuche wurden die Faserwerte bestimmt. Dabei hat sich gezeigt, daß bei niedrigeren Spinntemperaturen auf Grund der dadurch angestiegenen Viskosität der Spinnlösung, die zu einer höheren Orientierung der Cellulosemolekiile im Düsenkanal führt, bessere textilphysikalische Werte der Fasern erreicht werden.

Tabelle III

| Beispiel Nr. | Spinntemp. °C | Titer tex | Faserwerte | | | | |
|---|---|---|---|---|---|---|---|
| | | | Dehnung % | | Festigkeiten mN/tex | | |
| | | | trocken | naß | trocken | naß | Schlinge |
| 6 | 70 | 0,156 | 12 | 13 | 483 | 407 | 149 |
| 7 | 75 | 0,150 | 11 | 13 | 480 | 403 | 146 |
| 8 | 80 | 0,153 | 11 | 12 | 478 | 395 | 139 |
| 9 | 85 | 0,155 | 10 | 12 | 472 | 385 | 129 |
| 10 | 90 | 0,154 | 10 | 12 | 462 | 367 | 120 |
| 11 | 95 | 0,153 | 10 | 12 | 448 | 343 | 112 |
| 12 | 115 | 0,156 | 9 | 11 | 316 | 222 | 80 |

Beispiele 12 bis 15

Zur Veranschaulichung des Einsatzes unterschiedlich dimensionierter Spinntrichter bei der Filamentherstellung wird eine Lösung, bestehend aus 6,10 Gew.-% Cellulose (Cuoxam DP 550), 93,88 Gew.-% N-Methylmorpholin-N-oxid-Monohydrat und 0,02 Gew.-% eines Stabilisators bei 85 °C durch Spinndüsen mit unterschiedlicher Anzahl von Kapillaren (D = 120 µm bzw. 100 µm; L = 2 D) entsprechend Tabelle IV gepreßt. Die Fadenschar wird im Luftspalt (10 mm) zwischen Spinndüsenaustritt und Spinnbadeintritt im Bereich 2,2 bis 2,7 verzogen, ca. 20 mm unterhalb der Spinnbadoberfläche von einem Spinntrichter aus Glas mit den in Tabelle IV angegebenen Dimensionen (vergl. Figur) axial erfaßt, abgezogen und mit einer Geschwindigkeit von 50 m/min einem Umlenkorgan zugeführt. Der Spinntrichter ist so dimensioniert, daß die Zuführgeschwindigkeit durch den Spinntrichter gleich oder wenig geringer als die Abzugsgeschwindigkeit der nachfolgenden Waschanlage für den NMMNO-Austausch ist. Nach dem Waschen passiert das Filamentgarn eine Avivierung, wird getrocknet und von einem fadenspannungsgesteuerten Wickler aufgenommen. Den Fadenlauf während des Erspinnens zeigt die Figur, die Parameter der Spinntrichter in Abhängigkeit vom Titer, Kapillardurchmesser und Abzugsgeschwindigkeit die Tabelle IV.

Tabelle IV

| Beispiel Nr. | Kapillardurchmesser µm | Titer[1] tex | Abzugsgeschwindigkeit m/min | Spinnverzug | Spinntrichterdimension | | |
|---|---|---|---|---|---|---|---|
| | | | | | SL mm | ED mm | AD mm |
| 12 | 120 | 12 (36) | 40 | 2,3 | 400 | 90 | 6 |
| 13 | 120 | 7,2(24) | 50 | 2,6 | 450 | 75 | 4,7 |
| 14 | 120 | 7,2(18) | 70 | 2,7 | 620 | 75 | 4,7 |
| 15 | 100 | 12 (48) | 50 | 2,2 | 450 | 90 | 6 |

[1] Die Zahlen in Klammern bedeuten die Anzahl der zum Filamentgarn gehörenden Einzelkapillaren.

EP 0 574 870 B1

Beispiele 16 und 17 und Vergleichsbeispiele 5 und 6

In einem beheizbaren Mischer wird eine Lösung von Holzzellstoff in N-Methylmorpholin-N-oxid/Wasser (Monohydrat) mit einem Cellulosegehalt von 10,5 Gew.-% hergestellt und aus einem Vorratsgefäß über eine Zahnradpumpe einer Schlitzdüse mit einer Schlitzlänge von 4 cm und Schlitzbreiten von jeweils 0,03 cm, 0,02 cm, 0,015 cm und 0,010 cm zugeführt. Bei einer Düsentemperatur von 70 °C durchläuft der aus der Düse austretende Film der Spinnlösung einen 12 mm breiten Luftspalt und gelangt dann in eine verdünnte wässrige Lösung des Aminoxids als Spinnbad, deren Temperatur bei 5,5 °C liegt. Die im Spinnbad ausgefällte Cellulosefolie wird mit einer Endabzugsgeschwindigkeit von 50 m/min abgezogen, mittels Durchleiten durch mehrere Waschbäder aminoxidfrei gewaschen und getrocknet. Die Dicke der Folie beträgt etwa 12 μm.

Es wurden die textilphysikatischen Werte der erhaltenen Folienbändchen bestimmt. Die in der Tabelle V angegebenen Werte zeigen, daß trotz eines Spinnverzugs von weniger als 3 Folien mit sehr guten physikalischen Eigenschaften erhalten werden. Besonders die Knotenfestigkeit und die Knotendehnung, die fiir verschiedene Einsatzgebiete von Folienbändchen - auch in weiterverarbeiteter Form - von Bedeutung sind, steigen mit fallendem Spinnverzug und wachsendem Schergefälle.

Tabelle V

| | Schlitzgröße Länge x Breite cm x cm | Schergefälle $10^4$ s$^{-1}$ | Verzug | Titer tex | Physik. Werte d. Folienbändchen | | | |
|---|---|---|---|---|---|---|---|---|
| | | | | | Dehnung % | | Festigkeit cN/tex | |
| | | | | | trocken | Knoten | trocken | Knoten |
| Beisp. 16 | 4 x 0,010 | 3,0 | 1,66 | 300 | 9,4 | 3,8 | 15,5 | 6,9 |
| Beisp. 17 | 4 x 0,015 | 1,33 | 2,5 | 311 | 9,1 | 3,5 | 16,2 | 6,5 |
| Vergl.-Beisp. 5 | 4 x 0,02 | 0,75 | 3,3 | 305 | 8,5 | 3,0 | 16,9 | 6,1 |
| Vergl.-Beisp. 6 | 4 x 0,03 | 0,33 | 5,0 | 309 | 7,5 | 2,1 | 18,3 | 5,3 |

Unter Verzug ist hier das Spinn-Verstreckungsverhältnis zu verstehen, das die Lineargeschwindigkeit des ausgefällten Formkörpers geteilt durch die Lineargeschwindigkeit der das Werkzeug verlassenden Lösung ist.

Beispiele 18 bis 24

Eine Spinnlösung aus 10,0 Masse-% Cellulose (Cuoxam DP = 520), 78,0 Masse-% N-Methylmorpholin-N-oxid und 12,0 Masse-% Wasser wird durch Spinndiisen von unterschiedlichem Querschnitt und unterschiedlicher Dimensionierung entsprechend den Angaben in Tabelle VI extrudiert. Bei einer Düsentemperatur von 95 °C durchlaufen die aus den Düsen austretenden Spinnstrahlen einen 11 mm breiten Luftspalt, in dem der in der Tabelle VI angegebene Verzug erfolgt. Bei den Versuchen wurde z.T. die Schergeschwindigkeit in der Spinndüse und z.T. die Abzugsgeschwindigkeit variiert. Aus den ersponnenen Einzelfilamenten wurden Garne gleicher Feinheit hergestellt. Die Reißfestigkeit der Garne wurde bestimmt. Die ermittelten Zahlenwerte sind in der Tabelle VI angegeben.

Tabelle VI

| Beispiel Nr. | Filamentgarn tex | Einzelfilament tex | Spinnverzug | Spinndüse Querschnitt | Spinndüse Dimensionierung µm | Schergeschwindigkeit 1/s | Abzugsgeschwindigkeit m/min | Reißfestigkeit cN/tex |
|---|---|---|---|---|---|---|---|---|
| 18 | 12(36) | 0,33 | 2,3 | O | 100 | 23200 | 40 | 26,5 |
| 19 | 12(36) | 0,33 | 2,3 | ▯ | 200 x 40 | 42700 | 40 | 37,2 |
| 20 | 12(36) | 0,33 | 2,3 | ▯ | 200 x 40 | 65200 | 60 | 44,8 |
| 21 | 12(36) | 0,33 | 2,3 | Y | 3(80 x 35) | 46500 | 40 | 38,5 |
| 22 | 12(36) | 0,33 | 2,9 | Y | 3(80 x 30) | 63300 | 40 | 43,9 |
| 23 | 12(80) | 0,15 | 2,1 | O | 60 | 38700 | 50 | 41,0 |
| 24 | 12(80) | 0,15 | 2,1 | ▯ | 100 x 30 | 54700 | 50 | 49,4 |

Aus der Tabelle VI ist ersichtlich, daß der Übergang von dem kreisförmigen zu dem rechteckigen bzw. Y-förmigen (Winkel zweischen den Stegen 120°) Querschnitt bei gleicher Feinheit und Querschnittsfläche die Schergeschwindigkeit im Düsenkanal um einen Faktor von bis zu 2 erhöht (vergl. die Beispiele 18, 19 und 21 sowie 23 und 24). Die Reißfestigkeit des Garns steigt dabei bis um den Faktor 1,45. Eine Verminderung der Querschnittsfläche gestattet bei gleicher Feinheit ein Anheben der Schergeschwindigkeit um einen Faktor von etwa 1,4. Die Reißfestigkeit des daraus

EP 0 574 870 B1

hergestellten Filamentgarns steigt um etwa 14% (vergl. Beispiele 21 und 22). Die Profilierung des Cellulosefadens begünstigt den Stoffaustausch bzw. die Diffusion beim Ausfällen und Waschen. Dies ermöglicht eine Erhöhung der Abzugsgeschwindigkeit und damit bei gleichem Verzug eine Erhöhung des radialen Geschwindigkeitsgefälles um den Faktor 1,5 (vergl. Beispiele 19 und 20). Insgesamt ist demnach festzustellen, daß die Erhöhung der Schergeschwindigkeit im profilierten Düsenkanal zu einem erheblichen Anstieg der Reißfestigkeit führt und die Erhöhung der Abzugsgeschwindigkeit die Leistungsfähigkeit des Gesamtverfahrens positiv beinflußt.

Beispiele 25 und 26

An den aus Spinnfasern nach Beispiel 23 und 24 hergestellten Spinnfasergarnen von 40 tex wurden die Haftlängen der Bänder in Anlehnung an DIN 53834, Teil 1, "Einfacher Zugversuch an Garnen und Zwirnen" gemessen. Sie betrug 110 mN/ktex bei dem Band aus Spinnfasern nach Beispiel 23 und 225 mN/ktex bei dem Band aus Spinnfasern nach Beispiel 24.

Beispiele 27 und 28 und Vergleichsbeispiel 7

Aus den nach den Beispielen 18 und 21 hergestellten Filamentgarnen [2x12(36)tex] und aus einem Viskosefilamentgarn [2x12(40)tex] aus durch kreisrunde Düsen ersponnenen Filamenten wurden einkettigeinschussige Flachgewebe (Leinwandbindung) mit den gleichen Fadendichten von 22 Fäden/cm in Schuß und Kette hergestellt. Die Gewebeproben wurden visuell auf ihre Schiebefestigkeit geprüft und beurteilt. Dabei zeigte sich, daß das Gewebe aus dem Filamentgarn nach Beispiel 18 eine deutlich geringere und das Gewebe aus dem Filamentgarn nach Beispiel 21 eine gleiche bis leicht erhöhte Schiebefestigkeit besaß als das Vergleichsgewebe aus Viskosefilamentgarn.

**Patentansprüche**

1.  Verfahren zur Herstellung von Cellulosefasern, -filamenten und -folien nach dem Trocken-Naßextrusionsverfahren, aus einer Lösung von Cellulose in einem Wasser enthaltenden N-Oxid eines tertiären Amins, insbesondere N-Methylmorpholin-N-oxid, durch Extrudieren der Lösung durch ein Formwerkzeug in ein die Cellulose nicht ausfällendes Medium, Orientieren der Cellulosemoleküle durch Verzug des extrudierten Lösungsstrahls in diesem Medium und Ausfällen der Cellulose aus dem Lösungsstrahl durch Berührung mit einem Fällmedium ohne Verstreckung, dadurch gekennzeichnet, daß man die Celluloselösung durch ein Formwerkzeug extrudiert, dessen zylindrische Düsenkanäle einen Durchmesser in dem Bereich von 50 bis 120 µm oder dessen Schlitze eine Breite in dem Bereich von 50 bis 200 µm haben, durch das Schergefälle im Formwerkzeugkanal einen Lösungsstrahl mit vororientierten Cellulosemolekülen erzeugt und den Verzug dieses Lösungsstrahls in dem nicht ausfällenden Medium in einem Verhältnis in dein Bereich 1,4 < V < 3 durchführt.

2.  Verfahren nach Anspruch 1, dadurch gekennzeichnet, daß die Berührung des Lösungsstrahls mit dem Fällmedium im Gleichstrom in einem Spinntrichter erfolgt.

3.  Verfahren nach Anspruch 2, dadurch gekennzeichnet, daß der Verzug dadurch erreicht wird, daß der ausfallende Formkörper von dem durch den Spinntrichter strömenden Fällmedium im wesentlichen auf seine Abzugsgeschwindigkeit beschleunigt wird.

4.  Verfahren nach einem der Ansprüche 1 bis 3, dadurch gekennzeichnet, daß man die Fasern bzw. Filamente aus Lösungen mit einer Nullscherviskosität bei 95°C in dem Bereich von 600 bis 6000 pa s erspinnt.

5.  Verfahren nach einem der Ansprüche 1 bis 4, dadurch gekennzeichnet, daß man den Lösungsstrahl eine Schicht des nicht-ausfällenden Mediums einer Dicke in dem Bereich von 2 bis 20 mm passieren läßt.

6.  Verfahren nach Anspruch 1, dadurch gekennzeichnet, daß man die Lösung zu Schlauchfolien für die Lebensmittelindustrie extrudiert.

7.  Verfahren nach einem der Ansprüche 1 bis 6, dadurch gekennzeichnet, daß man die Lösung mit einer Temperatur in dem Bereich von 70 bis 95°C in das nicht ausfällende Medium extrudiert.

# EP 0 574 870 B1

## Claims

1. Process for manufacturing fibers, filaments and films of cellulose by the dry-wet extrusion process from a solution of cellulose in an aqueous amine N-oxide, especially N-methylmorpholine-N-oxide by extruding the solution through a forming die into a non-precipitating medium for cellulose, orienting the cellulose molecules by drawing the extruded jet of solution in this medium, and precipitating the cellulose from the jet of solution by contacting it with a precipitating medium without drawing, characterized in that the solution of cellulose is extruded through a forming die the cylindrical nozzle passages of which have a diameter in the range from 50 to 120 µm or the slits of which have a width in the range from 50 to 200 µm, a jet of solution with preoriented cellulose molecules is generated by the shear gradient in the passage of the forming die, and the drawing of this jet of solution is carried out in the non-precipitating medium with a ratio in the range 1.4<V< 3.

2. Process of claim 1, characterized in that the jet of solution is concurrently contacted with said precipitating medium in a spinning funnel.

3. Process of claim 2, characterized in that the drawing is achieved by accelerating the precipitating moulding substantially to its draw-off velocity by said precipitating medium flowing through said spinning funnel.

4. Process of any of the claims 1 to 3, characterized in that the fibers or filaments are spun from aqueous solutions having a zero shear viscosity at 95°C in the range from 600 to 6000 Pa·s.

5. Process of any of the claims 1 to 4, characterized in that the jet of solution is passed through a layer of non-precipitating medium having a thickness in the range from about 2 to 20 mm.

6. Process according to claim 1, characterized in that the solution is extruded to tubular films for the food industry.

7. Process according to any of the claims 1 to 6, characterized in that the solution having a temperature in the range from 70 to 95°C is extruded into the non-precipitating medium.

## Revendications

1. Procédé pour la fabrication de fibres, de filaments et de feuilles de cellulose conformément au procédé d'extrusion par voie sèche-par voie humide, à partir d'une solution de cellulose dans un N-oxyde d'une amine tertiaire, en particulier du N-oxyde de N-méthylmorpholine contenant de l'eau, par extrusion de la solution à travers un moule dans un milieu qui ne précipite pas la cellulose, orientation des molécules de cellulose par étirage dans ce milieu du faisceau en solution extrudé et précipitation de la cellulose hors du faisceau en solution par mise en contact avec un milieu de précipitation en l'absence d'étirage, caractérisé en ce qu'on extrude la solution de cellulose à travers un moule dont les canaux d'écoulement possèdent un diamètre dans le domaine de 50 à 120 µm ou dont les fentes possèdent une largeur dans le domaine de 50 à 200 µm; via le gradient de cisaillement dans le canal du moule, on forme un faisceau en solution contenant des molécules de cellulose préorientées; et on effectue l'étirage de ce faisceau en solution dans le milieu de non-précipitation dans un rapport dans le domaine de 1,4 < V < 3.

2. Procédé selon la revendication 1, caractérisé en ce que la mise en contact du faisceau de solution avec le milieu de précipitation a lieu sous forme d'un courant parallèle dans un entonnoir de filature.

3. Procédé selon la revendication 2, caractérisé en ce qu'on obtient l'étirage en soumettant essentiellement à une accélération la vitesse de tirage du corps moulé qui précipite à partir du milieu de précipitation s'écoulant à travers l'entonnoir de filature.

4. Procédé selon l'une quelconque des revendications 1 à 3, caractérisé en ce qu'on soumet à une filature les fibres, respectivement les filaments à partir de solutions possédant une viscosité à cisaillement nul, à 95°C dans le domaine de 600 à 6000 pa.s.

5. Procédé selon l'une quelconque des revendications là 4, caractérisé en ce qu'on fait passer devant le faisceau en solution une couche du milieu de non-précipitation possédant une épaisseur dans le domaine de 2 à 20 mm.

6. Procédé selon la revendication 1, caractérisé en ce qu'on extrude la solution pour obtenir des feuilles tubulaires destinées à l'industrie alimentaire.

7. Procédé selon l'une quelconque des revendications 1 à 6, caractérisé en ce qu'on extrude la solution à une température dans le domaine de 70 à 95°C dans le milieu de non-précipitation.